# EUROPÄISCHE PATENTSCHRIFT

(11) **EP 2 577 321 B1**
(45) Veröffentlichungstag und Bekanntmachung des Hinweises auf die Patenterteilung: **19.04.2017**
(21) Anmeldenummer: 11730897.3
(22) Anmeldetag: 14.05.2011
(51) Int. Cl.: G01N 35/10, B01L 3/02

(54) **VORRICHTUNG UND VERFAHREN ZUR RESTLOSEN AUFNAHME VON FLÜSSIGKEITEN AUS GEFÄSSEN**
APPARATUS AND METHOD FOR REMAINDER-LESS UPTAKE OF LIQUIDS FROM VESSELS
DISPOSITIF ET PROCÉDÉ DE COLLECTE INTÉGRALE DE LIQUIDES À PARTIR DE RÉCIPIENTS

(30) Priorität: 02.06.2010 DE 102010022552
(43) Veröffentlichungstag der Anmeldung: 10.04.2013
(73) Patentinhaber: PerkinElmer chemagen Technologie GmbH, 52499 Baesweiler (DE)
(72) Erfinder: A BRASSARD, Lothar, 52525 Heinsberg (DE); JÄNTGES, Uwe, 52074 Aachen (DE)
(74) Vertreter: Flaccus, Rolf-Dieter
(86) Internationale Anmeldenummer: PCT/EP2011/002396
(87) Internationale Veröffentlichungsnummer: WO 2011/151014

(56) Entgegenhaltungen:
- EP-A2- 1 933 154
- WO-A1-2009/084451
- JP-A- 55 039 029
- US-A- 4 944 922
- US-A- 5 895 630
- US-A- 6 143 250
- US-A1- 2007 012 123
- US-A1- 2007 231 217
- US-B1- 6 270 726
- US-B1- 6 363 802
- US-B1- 7 637 175

## Beschreibung

Die vorliegende Erfindung befasst sich mit einer Vorrichtung und einem Verfahren zur restlosen Aufnahme von Flüssigkeiten aus Gefäßen, insbesondere für die Entnahme von Reagenzien aus Reaktionsgefäßen durch Pipetten.

Insbesondere bei Anwendungen im Bereich der Laboranalytik, werden häufig unterschiedliche Prozesse miteinander verknüpft. Dabei werden zur Aufnahme von Flüssigkeiten unter anderem spezielle Gefäße verwendet, wobei die Flüssigkeiten im Verlauf der Anwendung wieder entnommen werden.

Aufgrund der fortschreitenden Automatisierung kommen verstärkt Robotersysteme (z.B. Liquid Handling Automaten) zum Einsatz, um beispielsweise ein Probenextrakt aus einem Gefäß eines ersten Prozesses in ein entsprechendes Behältnis für einen zweiten Prozesses zu überführen.

Diese Systeme zum Flüssigkeitstransfer bestehen zumeist aus Entnahmeeinheiten (z.B. Pipetten), die von oben in die in der Regel aufrecht stehenden Gefäße eintauchen und die Flüssigkeit aus den Gefäßen heraus saugen.

Die Entnahmeeinheiten weisen eine Entnahmespitze auf, die in die Flüssigkeit eingetaucht wird, um die Flüssigkeit zu entnehmen. Diese Spitze ist so geformt, dass ein Kanal, durch den die Flüssigkeit strömen kann, von einer Wandung umgeben ist. Der Kanal führt beginnend an der Entnahmespitze durch die Entnahmeeinheit hindurch.
Herrscht ein Unterdruck in dem Kanal wird die Flüssigkeit aus dem Gefäß herausgesaugt. Auf diese Weise wird die Flüssigkeit entnommen.

Die Entnahmespitze weist an ihrem Ende eine Endfläche auf, die von der begrenzenden Wandung definiert wird.

Nachteil dieser bestehenden Systeme zum Flüssigkeitstransfer ist, dass die Flüssigkeit nicht restlos oder zumindest annähernd restlos aus den Gefäßen entnommen werden kann. Insbesondere geringe Flüssigkeitsmengen sind daher zurzeit nicht oder nur sehr schwer aus den Gefäßen zu entnehmen.

Dies liegt darin begründet, dass immer ein gewisses Restvolumen im Gefäß verbleiben muss, da beim Versuch der quantitativen Überführung der Flüssigkeit die Gefahr besteht, dass durch eine zu tiefe Positionierung einer Entnahmeeinheit ein luft- oder flüssigkeitsdichter Abschluss zwischen der Entnahmespitze dieser Einheit und dem Gefäßboden entsteht. Beispielsweise darf eine Pipetierspitze in der Regel nicht den Boden des Gefäßes berühren, da beim Aufziehen der Flüssigkeit ein Unterdruck entsteht, der die Pipetierspitze an den Gefäßboden ansaugt und eine Flüssigkeitsaufnahme zunächst nicht erfolgen kann, da diese nicht in die Pipetierspitze eindringen kann.
Durch die anschließende Bewegung der Pipetierspitze nach oben bei bestehendem Unterdruck wird die Verbindung zum Gefäßboden gelöst und die Flüssigkeit schießt unkontrolliert in die Spitze. Dabei wird sie meist bis zum Filter eingesogen, was eine folgende kontrollierte Abgabe unmöglich macht.

Das bestehende Problem wird durch die Varianzen bezüglich Bemaßung und Form der Plastikmaterialien (Pipetierspitzen, Gefäße) noch verstärkt. Für hochsensitive Anwendungen im Bereich der PCR-basierten Analytik ist der automatisierte Transfer geringer Flüssigkeitsmengen quantitativ notwendig, da alle bisherigen Maßnahmen zu Sensitivitätsverlusten bzw. zum Totalverlust führen.

WO 2009/084451 A1 offenbart eine Vorrichtung zur Aufnahme von Flüssigkeiten aus Gefäßen mittels Entnahmeeinheiten. Die Ansaugöffnung zum Ansaugen der Flüssigkeiten ist auf einer seitlichen Umfangsfläche der Entnahmeeinheit angeordnet.

JP 55 039029 A offenbart eine Vorrichtung zur Aufnahme von Flüssigkeiten aus Gefäßen mittels eines Saugrohrs, dessen vordere Spitze abgeschrägt ist. Das Saugrohr ist mittig innerhalb des Gefäßes angeordnet. Der Boden des Gefäßes ist elastisch gelagert, beispielsweise mittels Polyurethanschaumgummi. Dadurch ist es möglich, die Spitze des Saugrohrs bis auf den Boden des Gefäßes abzusenken, ohne dass die Spitze deformiert wird.

US 6 363 802 B1 offenbart eine Vorrichtung zum präzisen Absaugen kleiner Flüssigkeitsvolumina aus einem Probengefäß. Die Vorrichtung umfasst eine Saugsonde, deren Spitze in die abzusaugende Flüssigkeit eingetaucht wird. Die Saugsonde ist im Probengefäß mittig angeordnet. Die Spitze wird über einen Antriebsmechanismus in das Gefäß abgesenkt, bis die Spitze mit einer vorherbestimmbaren Kraft auf den Boden des Gefäßes auftrifft.

US 6 270 726 B1 betrifft eine Pipettierstation mit einer Pipettiersonde und einer Abtasteinrichtung, die ein kontrolliertes Absenken der Pipettiersonde bis auf den Boden des Probengefäßes ermöglicht. Die Pipettiersonde ist im Probengefäß mittig angeordnet.

Der vorliegenden Erfindung lag die Aufgabe zugrunde, eine Vorrichtung und ein Verfahren zur Verfügung zu stellen, welche die oben aufgeführten Nachteile überwinden und zur restlosen Aufnahme von Flüssigkeiten aus Gefäßen geeignet sind.

Die Aufgabe wird durch die Vorrichtung gemäß Anspruch 1 und das Verfahren gemäß Anspruch 8 gelöst.

Danach betrifft die Erfindung eine Vorrichtung zur Aufnahme von Flüssigkeiten aus Gefäßen mittels Entnahmeeinheiten mit Entnahmespitzen, wobei die Vorrichtung Entnahmeeinheiten mit Entnahmespitzen sowie Gefäße für die zu entnehmende Flüssigkeit umfasst. Dabei sind die Entnahmespitzen so geformt, dass ein von einer Wandung umgebener, an der Entnahmespitze beginnender Kanal gebildet wird, wobei die Entnahmespitzen an ihrem Ende eine Endfläche aufweisen, die von der umgebenden Wandung definiert wird.

Die erfindungsgemäße Vorrichtung ist dadurch gekennzeichnet, dass die Entnahmespitze oder der Gefäßboden so gestaltet oder relativ zueinander angeordnet ist/sind, dass der Flächenbereich des Gefäßbodens, auf dem bei Einführung der Entnahmespitze in das Gefäß die Entnahmespitze aufsetzen würde, und die Endfläche der Entnahmespitze zumindest auf einem Teilstück der beiden Flächenbereiche zueinander geneigt sind, dort also nicht parallel verlaufen; und wobei
- der Boden des Gefäßes gekrümmt ist und die Entnahmespitze exzentrisch zum Scheitelpunkt der Krümmung angeordnet ist; oder/und
- die Endfläche der Entnahmespitze die Form einer Krone aufweist oder Schlitze aufweist, die in die ansonsten plane Endfläche eingebracht sind.

Auf diese Weise entsteht selbst beim Aufsetzen der Entnahmespitze auf dem Gefäßboden stets ein Spalt zwischen der entsprechenden Bodenfläche und der Endfläche der Entnahmespitze, so dass ein Festsaugen verhindert wird. Die Flüssigkeit kann in diesem Falle durch den Spalt in die Entnahmeeinheit fließen.

Die erfindungsgemäße Vorrichtung ermöglicht die restlose Aufnahme von Flüssigkeiten aus einem Gefäß, in dem sich die zu entnehmende Flüssigkeit befindet.

Die Erfindung umfasst die folgenden Anordnungen oder Formen, alleine oder auch in Kombination miteinander:
- der Boden des Gefäßes ist relativ zur planen Endfläche der Entnahmespitze schräg angeordnet,
- der Boden des Gefäßes ist gekrümmt, wobei die Entnahmespitze exzentrisch zum Scheitelpunkt der Krümmung angeordnet ist,
- die Endfläche der Entnahmespitze hat eine von der planen Fläche abweichende Form, nämlich indem sie die Form einer Krone hat oder indem Schlitze in die ansonsten plane Endfläche eingebracht sind.

Ist das Gefäß am unteren Ende gewölbt, dann ist es zum Beispiel vorteilhaft, das Gefäß so unter der Entnahmeeinheit zu positionieren, dass die Spitze der Entnahmeeinheit ein wenig, d.h. 1/5 - 1/100 des Gefäßdurchmessers, von dem Scheitelpunkt der Wölbung entfernt den Boden des Gefäßes berühren würde.

Eine bevorzugte Ausführungsform enthält zudem mindestens ein Kompensationselement, welches dazu geeignet ist, dass bei einer Berührung der Entnahmespitze mit dem Gefäßboden, beim Einführen der Entnahmespitze in das Gefäß, das Gefäß oder die Entnahmespitze in Richtung der relativen Bewegungsrichtung von Entnahmespitze und Gefäß ausweichen kann. Dies ist zum Beispiel der Fall, wenn das Gefäß und/oder die Entnahmespitze federnd gelagert sind.

Bevorzugte Kompensationselemente sind aktive oder passive Elemente oder Kombinationen aus aktiven und passiven Elementen.

Bevorzugte passive Elemente sind Federn oder andere federnde Materialien, wie z.B. federnde Kunststoffe wie Schaumstoffe oder Gummi. Als Federn können insbesondere Spiral- oder Blattfedern verwendet werden.
- der Boden des Gefäßes ist gekrümmt, wobei die Entnahmespitze exzentrisch zum Scheitelpunkt der Krümmung angeordnet ist,
- die Endfläche der Entnahmespitze ist relativ zur Längsachse der Entnahmespitze abgeschrägt oder hat eine andere von der planen Fläche abweichende Form, z.B. die Form einer Krone oder es sind Schlitze in die ansonsten plane Endfläche eingebracht.

Ist das Gefäß am unteren Ende gewölbt, dann ist es zum Beispiel vorteilhaft, das Gefäß so unter der Entnahmeeinheit zu positionieren, dass die Spitze der Entnahmeeinheit ein wenig, d.h. 1/5 - 1/100 des Gefäßdurchmessers, von dem Scheitelpunkt der Wölbung entfernt den Boden des Gefäßes berühren würde.

Eine bevorzugte Ausführungsform enthält zudem mindestens ein Kompensationselement, welches dazu geeignet ist, dass bei einer Berührung der Entnahmespitze mit dem Gefäßboden, beim Einführen der Entnahmespitze in das Gefäß, das Gefäß oder die Entnahmespitze in Richtung der relativen Bewegungsrichtung von Entnahmespitze und Gefäß ausweichen kann. Dies ist zum Beispiel der Fall, wenn das Gefäß und/oder die Entnahmespitze federnd gelagert sind.

Bevorzugte Kompensationselemente sind aktive oder passive Elemente oder Kombinationen aus aktiven und passiven Elementen.

Bevorzugte passive Elemente sind Federn oder andere federnde Materialien, wie z.B. federnde Kunststoffe wie Schaumstoffe oder Gummi. Als Federn können insbesondere Spiral- oder Blattfedern verwendet werden.

Die passiven Elemente haben den Vorteil, dass eine Kompensation des Drucks auf den Gefäßboden und die Entnahmespitze einfach und ohne eine zusätzliche Regelung erfolgt.
Beim Aufsetzen der Entnahmespitze auf den Gefäßboden weicht dieser automatisch durch das elastische Kompensationselement nach unten aus oder die Entnahmespitze weicht nach oben aus.

Bevorzugte aktive Elemente sind Piezoelemente, Muskeldrähte oder Motoren die insbesondere jeweils mit Mechaniken versehen eine Kompensation des Drucks bei Berührung der Entnahmespitze mit dem Gefäßboden bewirken.

In einer bevorzugten Ausführungsform werden diese aktiven Elemente durch einen Sensor, der den Anpressdruck misst, und einer Steuerelektronik versehen, die die Auslenkung des Kompensationselements steuert.
Eine aktive Regelung des Drucks zwischen Entnahmespitze und Gefäßboden hat den Vorteil, dass Fehler, z.B. Verkantungen, kompensiert werden können.

In einer bevorzugten Ausführungsform sind die Kompensationselemente aus handelsüblichen Federmaterial aufgebaut. Insbesondere besteht ein Kompensationselement aus elastischen Kunststoffen oder Federn.

In einer bevorzugten Ausführungsform ist das Gefäß auf dem Kompensationselement vorzugsweise senkrecht oder leicht geneigt angeordnet, wobei es vorzugsweise durch eine auf dem Kompensationselement angebrachte Haltevorrichtung festgehalten wird.
Das Gefäß kann lösbar oder unlösbar mit dem Kompensationselement bzw. der Haltevorrichtung verbunden sein. Eine lösbare Verbindung hat den Vorteil, dass das Gefäß einfach austauschbar ist und z.B. Einweggefäße verwendet werden können.
Vorzugsweise ist das Gefäß nur auf das Kompensationselement bzw. die Haltevorrichtung aufgesetzt.

Vorzugsweise ist bei der ersten bevorzugten Ausführungsform das Kompensationselement auf einer Bodenplatte angebracht, um einen festen Stand des Elements zu gewährleisten.

Bei einer weiteren bevorzugten Ausführungsform ist das Kompensationselement direkt in oder an der Entnahmeeinheit angeordnet, so dass die gesamte Entnahmeeinheit elastisch gelagert ist, oder ein Teil der Wandung der Entnahmeeinheit besteht aus einem elastischen Material oder ist als Balg ausgeführt, so dass zumindest die Entnahmespitze elastisch gelagert ist.

Bei einer weiteren bevorzugten Ausführungsform sind Kompensationselemente sowohl an dem Gefäß als auch an der Entnahmeeinheit angeordnet.

Um eine Verkippung zu vermeiden, ist das Kompensationselement bevorzugt in einer Führungseinheit angeordnet, z.B. einer Hülse mit zumindest einer Öffnung an der Oberseite. Diese Führungseinheit weist Führungselemente auf, die das Kompensationselement, die Haltevorrichtung, das Gefäß oder die Entnahmeeinheit auf einem geraden Wege führen. Bevorzugt bilden die Wände der oben genannten Hülse die Führungselemente.
Die Länge der Führungseinheit ist so beschaffen, dass sie das Kompensationselement, bevorzugt mit Haltevorrichtung, besonders bevorzugt auch zumindest einen Teil des Gefäßes oder der Entnahmeeinheit aufnehmen kann.
Die Führungseinheit ist vorzugsweise fest auf der Bodenplatte angebracht, insbesondere ist die Führungseinheit mittels eines Gewindes auf der Bodenplatte aufgeschraubt.

In einer weiteren bevorzugten Ausführungsform ist das Kompensationselement als ein Abstandsverstellelement ausgebildet, welches dazu geeignet ist, bei der Aufnahme einer Flüssigkeit aus dem Gefäß durch eine Entnahmeeinheit den relativen vertikalen Abstand zwischen Gefäßboden und Spitze der Entnahmeeinheit in Abhängigkeit der in dem Gefäß befindlichen Flüssigkeitsmenge so zu verändern, dass bei zunehmender Flüssigkeitsentnahme der Abstand zwischen Gefäßboden und Spitze der Entnahmeeinheit abnimmt.
Dabei sollte während der Entnahme die Spitze der Entnahmeeinheit stets unterhalb des Flüssigkeitsspiegels liegen, damit keine Luft eingesogen wird.

Bei einem flüssigkeitsgefüllten Gefäß in das eine Entnahmeeinheit eingebracht wird, läuft das Entnahmeverfahren in diesem Fall wie folgt ab:
Im gefüllten Zustand des Gefäßes wird der Abstand zwischen Gefäßboden und Spitze der Entnahmeeinheit durch das Abstandsverstellelement maximal eingestellt.

Die Entnahmeeinheit entnimmt dem Gefäß Flüssigkeit. Durch diese Flüssigkeitsentnahme wird, abhängig von der Flüssigkeitsmenge, die Entnahmeeinheit schwerer und das Gefäß leichter. Im übrigen steigt der Flüssigkeitsspiegel in der Entnahmeeinheit und sinkt im Gefäß ab.

Bei fortlaufender Flüssigkeitsentnahme durch die Entnahmeeinheit wird dieser Abstand durch das Abstandsverstellelement in Abhängigkeit zur aufgenommenen Flüssigkeitsmenge stetig verringert. Dabei sollte die Spitze der Entnahmeeinheit stets unterhalb des Flüssigkeitsspiegels im Gefäß liegen.
Ein Maß für die entnommene Flüssigkeit kann zum einen die Gewichtskraft der aufgenommenen oder der im Gefäß verbliebenen Flüssigkeit sein oder der Flüssigkeitsspiegel in Gefäß oder Entnahmeeinheit.
Die Spitze der Entnahmeeinheit sollte den Gefäßboden nicht berühren, zumindest erst, wenn die Flüssigkeit nahezu komplett aufgesogen ist.

Bevorzugte Abstandsverstellelemente sind aktive oder passive Elemente oder Kombinationen aus aktiven und passiven Elementen.

Geeignete passive Elemente regulieren den Abstand zwischen Gefäßboden und Spitze der Entnahmeeinheit vorzugsweise durch die Gewichtskraft der im Gefäß enthaltenen Flüssigkeitsmenge.
Bei passiven Abstandsverstellelementen geschieht eine Regulierung des Abstands zwischen Gefäßboden und Spitze der Entnahmeeinheit aufgrund der stets unterschiedlichen Gewichtskraft der transferierten Flüssigkeitsmenge automatisch, wenn das Abstandsverstellelement unter dem Gefäß oder an der Entnahmeeinheit angeordnet ist. Das Gefäß wird leichter und wird automatisch durch das elastische Abstandsverstellelement nach oben gedrückt, bzw. die Entnahmeeinheit wird schwerer und senkt sich automatisch ab.

Geeignete aktive Elemente regulieren den Abstand zwischen Gefäßboden und Spitze der Entnahmeeinheit vorzugsweise durch die Gewichtskraft der im Gefäß enthaltenen oder der durch die Entnahmeeinheit aufgenommenen Flüssigkeitsmenge oder deren Flüssigkeitsspiegel.
In einer bevorzugten Ausführungsform werden diese Elemente durch einen Sensor, der die Flüssigkeitsmenge misst und einer Steuerelektronik versehen, die die Auslenkung des Abstandsverstellelements steuert.
Eine aktive Abstandsverstellung hat den Vorteil, dass Fehler, z.B. Verkantungen, kompensiert werden können. Eine Messung der Höhe des Flüssigkeitsspiegels im Gefäß durch den Sensor hat den zusätzlichen Vorteil, dass gleichzeitig kontrolliert werden kann, ob die Spitze der Entnahmeeinheit bei der Entnahme auch stets unterhalb des Flüssigkeitsspiegels liegt.

Vorzugsweise sind passive Abstandsverstellelemente für inhomogen geformte (z.B. am Ende gewölbte) Gefäße so beschaffen, dass das Gefäß so angehoben wird, dass die Abstandsänderung bei abfallender Flüssigkeitsmenge pro entnommener Flüssigkeitseinheit stetig abnimmt.
Insbesondere bei einer gefederten Ausführungsform ist es vorteilhaft, am Ende schwächere Federkräfte wirken zu lassen. Dies wird mit einer Anordnung verschieden starker Federn oder einer Feder mit inhomogener Auslenkung pro Gewichtskraft erreicht.

Die Vorrichtung kann für ein oder mehrere Reaktionsgefäße oder Entnahmeeinheiten zur gleichzeitigen oder sukzessiven Entnahme vorgesehen sein. In einer vorteilhaften Ausführungsform ist jedes Probengefäß bzw. jede Entnahmeeinheit einzeln gelagert, um eventuelle Varianzen auszugleichen. Vorzugsweise ist die Vorrichtung für Reaktionsplatten im 12er, 24er oder 96-Format vorgesehen, indem diese Vorrichtungen in einer entsprechenden Anzahl rasterförmig angeordnet sind.

Die Vorrichtung ist vorzugsweise so dimensioniert, dass sie mit handelsüblichen Automaten (Liquid Handlern) eingesetzt werden oder beim manuellen Arbeiten mit Pipetten eingesetzt werden kann.

Vorzugsweise weist die Vorrichtung Kalibrationselemente auf, um den Abstand zwischen Entnahmeeinheit und Gefäßboden, vorzugsweise in einem klar definierten Zustand der Vorrichtung, zu kalibrieren.

Bei einer bevorzugten Ausführungsform ist das Kompensationselement direkt im Gefäßboden integriert, insbesondere besteht der Gefäßboden aus einem federnden Material, z.B. ist der Gefäßboden geschäumt.

Beispiele für die erfindungsgemäße Vorrichtung sind in den Abbildungen dargestellt.
Figur 1 zeigt in den Teilen A bis D schematisch den Aufbau der Vorrichtung und den Ablauf des Verfahrens.
Figuren 2A und 2B zeigen Beispiele der Vorrichtung basierend auf Federn.

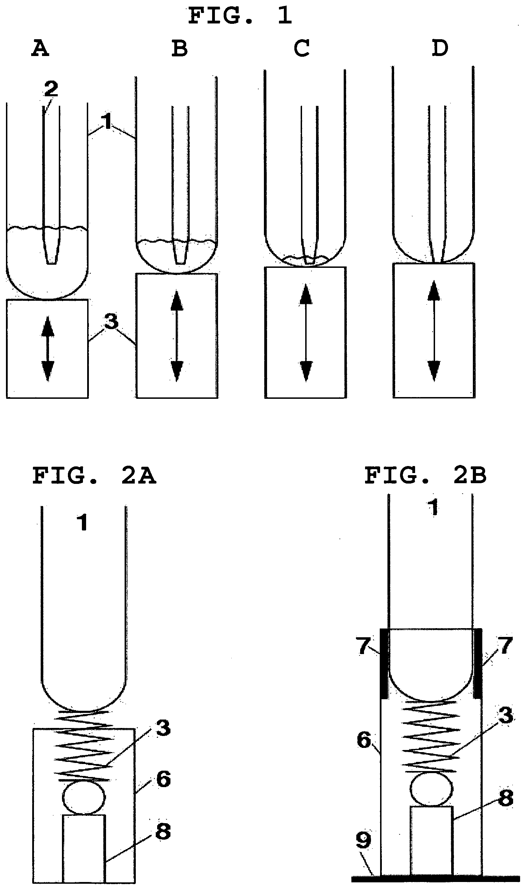

Figuren 2A und 2B zeigen Beispiele der Vorrichtung mit Haltern basierend auf Federn.

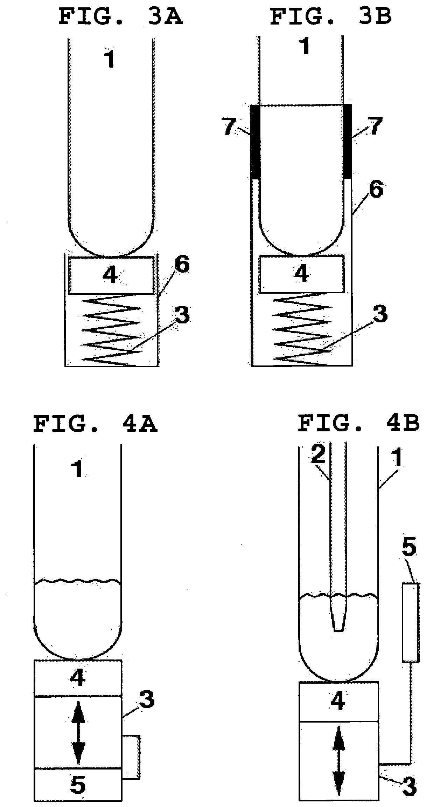

Figuren 4A und 4B zeigen Beispiele der Vorrichtung mit aktiven Kompensationselementen.

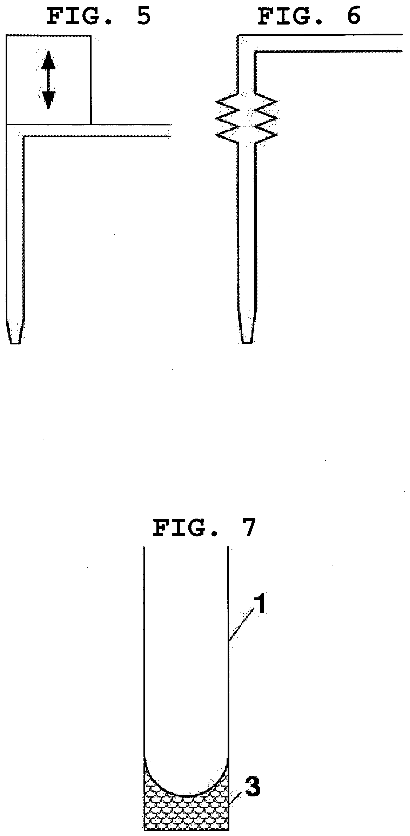

Figur 5 zeigt ein Beispiel der Vorrichtung mit einem Kompensationselement an der Entnahmeeinheit.
Figur 6 zeigt ein Beispiel der Vorrichtung mit einem in der Entnahmeeinheit integrierten Kompensationselement.
Figur 7 zeigt ein Gefäß mit integriertem Kompensationselement.

In Figur 1 (A) ist ein Kompensationselement (3) dargestellt, auf dem ein mit einer Flüssigkeit gefülltes Gefäß (1) angeordnet ist. Eine Pipette (2) wurde in das Gefäß eingebracht, um Flüssigkeit zu entnehmen.
In dem Beispiel ist die Pipette etwas exzentrisch zum Scheitelpunkt des Gefäßbodens angeordnet, um ein Ansaugen der Pipettenspitze zu verhindern.

In den Abbildungen 1B und 1C wirkt das Kompensationselement gleichzeitig als Abstandsverstellelement. Wird durch die Pipette Flüssigkeit aus dem Gefäß entnommen (B) sinkt der Flüssigkeitsspiegel in dem Gefäß und die durch die Flüssigkeit auf das Abstandsverstellelement ausgeübte Gewichtskraft. Das dadurch leichter werdende Gefäß wird durch das Abstandsverstellelement nach oben gehoben.
Das Gefäß wird so lange nach oben gehoben (C) bis die Spitze der Pipette auf dem Boden des Gefäßes aufsetzt oder sich zumindest sehr nahe über ihm befindet (D).

In Figur 1D wirkt das Kompensationselement so, dass der Druck, den die Pipettenspitze bei der Berührung auf den Gefäßboden ausübt, durch das Element kompensiert wird, in dem das Gefäß etwas nach unten ausweicht.

In Figur 2A ist das Gefäß (1) direkt auf eine Feder oder eine federnden Kunststoff als Kompensationselement (3) aufgebracht, wobei das Kompensationselement in einer Hülse (6) auf einer Befestigungseinheit (8) angeordnet ist.
In Figur 2B ist diese Hülse (6) so lang, dass das Gefäß mittels Führungselementen (7) sicher und gerade geführt werden kann. Zudem ist die Hülse und die Befestigungseinheit auf einer Bodenplatte (9) angeordnet.

Figuren 3A und 3B entsprechen dem Aufbau der Figuren 2A und 2B mit dem Unterschied, dass das Kompensationselement direkt auf dem Boden der Hülse aufsitzt und das Gefäß mittels einer Haltevorrichtung (4) gehalten wird.

In Figuren 4A und 4B wird das Gefäß durch eine Haltevorrichtung (4) gehalten, welche mit einem aktiven Kompensationselement verbunden ist. Das Kompensationselement wird durch einen Sensor mit Steuereinheit (5) gesteuert. Dieses Element (5) misst in Figur 4A die Gewichtskraft des Gefäßes und in Figur 4B die Höhe des Flüssigkeitsspiegels, wobei es dort gleichzeitig die Eintauchtiefe der Pipettenspitze überwacht, und lenkt das Abstandsverstellelement nach einem vorgegebenen Programm aus.
Ein solches Programm kann aus einer einfachen Formel bestehen, die jeder Gewichtskraft oder jeder Flüssigkeitsspiegelhöhe eine bestimmte Auslenkung zuweist.

In Figur 5 ist ein Kompensationselement (3) dargestellt, an dem eine Entnahmeeinheit (Pipette) so befestigt ist, dass Druck von unten auf die Entnahmespitze durch eine Ausweichbewegung nach oben kompensiert wird.

In Figur 6 ist eine Entnahmeeinheit (2) dargestellt, in deren Wand in einem bestimmten Bereich ein Kompensationselement (3) integriert ist. Dies kann dadurch realisiert werden, dass mit einem Zweikomponenten-Spritzgussverfahren ein Teil der Wand elastisch gestaltet wird, oder ein Teil der Wandung wie hier gezeigt als Balg ausgeführt ist.
In dem Fall, dass der Unterdruck in der Entnahmeeinheit konstant oder wenigstens gleichförmig ist, wird der untere Teil der Entnahmeeinheit durch die zunehmend aufgenommene Flüssigkeit stetig schwerer so dass die Spitze auch automatisch abgesenkt werden kann, dass Kompensationselement also als Abstandsverstellelement wirkt.

In Figur 7 ist ein Gefäß (1) dargestellt, dessen Boden aus einem geschäumten Material beseht, das nach innen versiegelt ist, um eine Ausreichende Dichtigkeit für Flüssigkeiten zu gewährleisten. Dieses geschäumte Material muss dabei elastisch genug sein, um als Kompensationselement (3) dienen zu können. Solche Gefäße können z.B. mit einem Zweikomponenten-Spritzgussverfahren hergestellt werden.
Vorteil solcher Gefäße ist, dass sie in bereits vorhandene Halterungen für Einweggefäße eingesetzt werden können.

## Patentansprüche

1. Vorrichtung zur Aufnahme von Flüssigkeiten aus Gefäßen mittels Entnahmeeinheiten mit Entnahmespitzen, wobei die Vorrichtung Entnahmeeinheiten (2) mit Entnahmespitzen sowie Gefäße (1) für die zu entnehmende Flüssigkeit umfasst, und wobei die Entnahmespitzen so geformt sind, dass ein von einer Wandung umgebener, an der Entnahmespitze beginnender Kanal gebildet wird, und wobei die Entnahmespitzen an ihrem Ende eine Endfläche aufweisen, die von der umgebenden Wandung definiert, wobei die Entnahmespitze oder der Gefäßboden so gestaltet oder relativ zueinander angeordnet ist/sind, dass der Flächenbereich des Gefäßbodens, auf dem bei Einführung der Entnahmespitze in das Gefäß die Entnahmespitze aufsetzen würde, und die Endfläche der Entnahmespitze zumindest auf einem Teilstück der beiden Flächenbereiche zueinander geneigt sind, dort also nicht parallel verlaufen; **dadurch gekennzeichnet, dass**:
- der Boden des Gefäßes (1) gekrümmt ist und die Entnahmespitze exzentrisch zum Scheitelpunkt der Krümmung angeordnet ist; oder/und
- die Endfläche der Entnahmespitze die Form einer Krone aufweist oder Schlitze aufweist, die in die ansonsten plane Endfläche eingebracht sind.

2. Vorrichtung nach Anspruch 1, **dadurch gekennzeichnet, dass** die Vorrichtung mindestens ein Kompensationselement (3) enthält, welches dazu geeignet ist, dass bei einer Berührung der Entnahmespitze mit dem Gefäßboden das Gefäß oder die Entnahmespitze in Richtung der relativen Bewegungsrichtung von Entnahmespitze und Gefäß ausweichen kann.

3. Vorrichtung nach Anspruch 1 oder 2, **dadurch gekennzeichnet, dass** das Kompensationselement (3) in einer Führungseinheit angeordnet ist, bevorzugt einer Hülse (6) mit zumindest einer Öffnung an der Oberseite, wobei die Führungseinheit vorzugsweise Führungselemente (7) aufweist, die das Kompensationselement, die Haltevorrichtung, das Gefäß (1) oder die Entnahmeeinheit (2) auf einem geraden Wege führen, wobei insbesondere die Wände der Hülse selbst die Führungselemente bilden.

4. Vorrichtung nach einem der vorangehenden Ansprüche, **dadurch gekennzeichnet, dass** die Länge der Hülse so beschaffen ist, dass sie das Kompensationselement (3), bevorzugt mit Haltevorrichtung (4), besonders bevorzugt auch zumindest einen Teil des Gefäßes (1) oder der Entnahmeeinheit (2) aufnehmen kann.

5. Vorrichtung nach einem der vorangehenden Ansprüche, **dadurch gekennzeichnet, dass** das Kompensationselement (3) Elemente aus der Gruppe aktive und passive Elemente enthält, vorzugsweise Elemente der Gruppe Federn, andere federnde Materialien, Piezo-elemente, Muskeldrähte und Motoren enthält.

6. Vorrichtung nach einem der vorangehenden Ansprüche, **dadurch gekennzeichnet, dass** die Kompensationselemente (3) als Abstandsverstellelemente ausgestaltet sind.

7. Vorrichtung nach einem der vorangehenden Ansprüche, **dadurch gekennzeichnet, dass** die Vorrichtung Kalibrationselemente aufweist auf, um den Abstand zwischen Gefäßboden und Spitze der Entnahmeeinheit zu kalibrieren.

8. Verfahren zur restlosen Aufnahme von Flüssigkeiten aus flüssigkeitsgefüllten Gefäßen durch Entnahmeeinheiten mit Entnahmespitzen, **dadurch gekennzeichnet, dass** eine Vorrichtung gemäß Anspruch 1 verwendet wird, bei welcher der Boden des Gefäßes (1) gekrümmt ist und die Entnahmespitze exzentrisch zum Scheitelpunkt der Krümmung angeordnet ist, wobei das Gefäß so unter der Entnahmeeinheit (2) positioniert wird, dass die Spitze der Entnahmeeinheit 1/5 bis 1/100 des Gefäßdurchmessers von dem Scheitelpunkt der Wölbung entfernt den Boden des Gefäßes berühren würde.

## Claims

1. Device for taking up liquids from vessels by means of removal units having removal tips, the device comprising removal units (2) having removal tips, and comprising vessels (1) for the liquid to be removed; said removal tips being shaped such that a channel is formed which is confined by a wall and which starts at said removal tip; and said removal tips having at their end an end surface which is defined by the confining wall; said removal tip or said vessel bottom being configured or arranged relative to each other such that that area of the surface of the vessel bottom on which the removal tip would touch down when said removal tip is being inserted into the vessel and the end surface of the removal tip are inclined relative to each other at least in a portion of the two surface areas, that is to say are not parallel there; **characterized in that**:
- the bottom of the vessel (1) is curved, and the removal tip is arranged eccentrically to the apex of the curvature; and/or
- the end surface of the removal tip has the shape of a crown or has slots incorporated in the otherwise plane end surface.

2. The device according to claim 1, **characterised in that** the device includes at least one compensation element (3) which is suited to ensure that when the removal tip touches the vessel bottom, the vessel or the removal tip can perform an evasive movement in the direction of the relative direction of movement of the removal tip and vessel.

3. The device according to claim 1 or 2, **characterised in that** said compensation element (3) is arranged in a guide unit, preferably a sleeve (6) having at least one opening at its top side, said guide unit preferably comprising guide elements (7) which guide the compensation element, the holding device, the vessel (1) or the removal unit (2) along a straight path, and, in particular, with the walls of the sleeve themselves forming the guide elements.

4. The device according to any one of the preceding claims, **characterised in that** the length of the sleeve is such that it may receive the compensation element (3), preferably with a holding device (4), and, especially preferably, also receive at least part of the vessel (1) or of the removal unit (2).

5. The device according to any one of the preceding claims, **characterised in that** the compensation element (3) comprises elements from the group comprising active and passive elements, preferably elements from the group comprising springs, other resilient materials, piezo elements, muscle wires and motors.

6. Device according to any one of the preceding claims, **characterised in that** the compensation elements (3) are configured as distance adjustment elements.

7. Device according to any one of the preceding claims, **characterised in that** the device comprises calibration elements to calibrate the distance between the vessel bottom and the tip of the removal unit.

8. Method for the complete uptake of liquids from liquid-filled vessels by means of removal units having removal tips, **characterised in that** a device as defined in claim 1 is used wherein the bottom of said vessel (1) is curved and said removal tip is arranged eccentrically to the apex of the curvature, said vessel being positioned underneath the removal unit (2) in such a way that the tip of the removal unit would touch the bottom of the vessel at 1/5th-1/100th of the vessel diameter away from the apex of the curvature.

## Revendications

1. Dispositif de prélèvement de liquides à partir de récipients au moyen d'unités de prélèvement ayant des pointes de prélèvement, dans lequel le dispositif comprend des unités de prélèvement (2) ayant des pointes de prélèvement ainsi que des récipients (1) pour le liquide à prélever, et dans lequel les pointes de prélèvement sont conformées de telle sorte que soit constitué un canal entouré d'une paroi et commençant à la pointe de prélèvement, et dans lequel les pointes de prélèvement comprennent à leur extrémité une face d'extrémité qui est définie par la paroi entourant le canal, dans lequel la pointe de prélèvement ou le fond du récipient est/sont conçu(es) ou disposé(es) l'un par rapport à l'autre de telle sorte que la zone de surface du fond du récipient sur laquelle, lors de l'introduction de la pointe de prélèvement dans le récipient, se positionne la pointe de prélèvement, et la face d'extrémité de la pointe de prélèvement soient inclinées l'une par rapport à l'autre au moins sur une partie des deux zones de surface, mais ne s'étendent pas parallèlement à cet endroit, **caractérisé en ce que** :
- le fond du récipient (1) est incurvé et la pointe de prélèvement est disposée de façon excentrée par rapport au sommet de l'incurvation ; et/ou
- la face d'extrémité de la pointe de prélèvement a la forme d'une couronne ou d'une fente qui sont rapportées dans la face d'extrémité plane par ailleurs.

2. Dispositif selon la revendication 1, **caractérisé en ce que** le dispositif contient au moins un élément de compensation (3) qui est adapté à ce que, lors d'un contact de la pointe de prélèvement avec le fond du récipient, le récipient ou la pointe de prélèvement puisse s'effacer dans la direction du déplacement relatif de la pointe de prélèvement et du récipient.

3. Dispositif selon la revendication 1 ou 2, **caractérisé en ce que** l'élément de compensation (3) est disposé dans une unité de guidage, de préférence un manchon (6) ayant au moins une ouverture du côté supérieur, dans lequel l'unité de guidage comprend de préférence des éléments de guidage (7) qui guident l'élément de compensation, le dispositif d'arrêt, le récipient (1) ou l'unité de prélèvement (2) selon un alignement, dans lequel les parois du manchon en particulier constituent elles-mêmes les éléments de guidage.

4. Dispositif selon l'une des revendications précédentes, **caractérisé en ce que** la longueur du manchon est déterminée de sorte qu'il puisse contenir l'élément de compensation (3), de préférence avec le dispositif d'arrêt (4), de manière particulièrement préférée aussi au moins une partie du récipient (1) ou de l'unité de prélèvement (2).

5. Dispositif selon l'une des revendications précédentes, **caractérisé en ce que** l'élément de compensation (3) contient des éléments du groupe des éléments actifs et passifs, contient de préférence des éléments du groupe des ressorts, d'autres matières élastiques, des éléments piézoélectriques, des fils musculaires et des moteurs.

6. Dispositif selon l'une des revendications précédentes, **caractérisé en ce que** les éléments de compensation (3) sont conformés en éléments de réglage d'écartement.

7. Dispositif selon l'une des revendications précédentes, **caractérisé en ce que** le dispositif comprend des éléments de calibrage pour calibrer la distance entre le fond du récipient et la pointe de l'unité de prélèvement.

8. Procédé pour le prélèvement complet de liquides à partir de récipients remplis de liquide grâce à des unités de prélèvement ayant des pointes de prélèvement, **caractérisé en ce que** l'on utilise un dispositif selon la revendication 1, dans lequel le fond du récipient (1) est incurvé et la pointe de prélèvement est disposée de façon excentrée par rapport au sommet de l'incurvation, dans lequel le récipient est positionné au-dessous de l'unité de prélèvement (2) de sorte que la pointe de l'unité de prélèvement toucherait le fond du récipient de 1/5è à 1/100è du diamètre du récipient par rapport au sommet de la courbure.
